(19) Europäisches Patentamt
European Patent Office
Office européen des brevets

(11) Veröffentlichungsnummer: **0 470 461 B1**

# (12) EUROPÄISCHE PATENTSCHRIFT

(45) Veröffentlichungstag der Patentschrift: **07.09.94**

(51) Int. Cl.[5]: **C08G 18/32**, C08G 18/62, C08G 18/79, C09D 175/04

(21) Anmeldenummer: **91112634.0**

(22) Anmeldetag: **27.07.91**

## (54) Verwendung von Zweikomponenten-Bindemittelkombinationen in Autoreparaturlacken.

(30) Priorität: **10.08.90 DE 4025347**

(43) Veröffentlichungstag der Anmeldung:
**12.02.92 Patentblatt 92/07**

(45) Bekanntmachung des Hinweises auf die Patenterteilung:
**07.09.94 Patentblatt 94/36**

(84) Benannte Vertragsstaaten:
**AT BE CH DE ES FR GB IT LI NL SE**

(56) Entgegenhaltungen:
**EP-A- 0 319 607**

(73) Patentinhaber: **BAYER AG**
**D-51368 Leverkusen (DE)**

(72) Erfinder: **Zwiener, Christian, Dr.**
**Hittorfstrasse 9**
**W-5000 Köln 60 (DE)**
Erfinder: **Sonntag. Michael, Dr.**
**Gartenstrasse 27a**
**W-5068 Odenthal 3 (DE)**
Erfinder: **Pedain, Josef, Dr.**
**Haferkamp 6**
**W-5000 Köln 80 (DE)**
Erfinder: **Schönfelder, Manfred, Dr.**
**Höhenstrasse 126**
**W-5090 Leverkusen 3 (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft die Verwendung von bestimmten Zweikomponenten-Kombinationen aus a) einer Polyisocyanatkomponente und b) einer Reaktivkomponente bestehend aus einem Gemisch von organischen Verbindungen mit gegenüber Isocyanatgruppen reaktionsfähigen Gruppen als Bindemittel in Autoreparaturlacken, insbesondere in Autoreparatur-Decklacken.

Zweikomponenten-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente, enthalten, sind seit langem bekannt. Sie eignen sich zur Herstellung von hochwertigen Überzügen, die hart, elastisch, abrieb- und lösungsmittelbeständig und vor allem auch witterungsstabil eingestellt werden können.

Aufgrund der bei Raumtemperatur relativ langsamen Reaktion zwischen Isocyanat- und Hydroxylgruppen resultieren bei diesen Beschichtungsbindemitteln jedoch sehr lange Trocknungszeiten, die einer wirtschaftlichen Arbeitsweise entgegenstehen. Die Aushärtung läßt sich zwar durch Temperaturerhöhung wesentlich beschleunigen, jedoch ist dies bei Kunststoffteilen nur bedingt möglich, so daß Reparaturlackierungen an z.B. fertig montierten Kraftfahrzeugen mit diesen Lacksystemen nicht möglich sind.

Die in den DE-OS 3 308 418 bzw. DE-PS 2 018 233 beschriebenen Systeme aus Polyisocyanaten und Ketiminen bzw. Oxazolidinen härten zwar bei Raumtemperatur in relativ kurzer Zeit aus, jedoch stehen diesen Systemen einige Nachteile gegenüber, wie z.B. die Isocyanat/Wasser-Reaktion als unerwünschte Konkurrenz zur Hydrolyse der Ketimine bzw. Oxazolidine, was unter anderem zu Blasenbildungen während der Trocknung führen kann. Weiterhin handelt es sich um Abspaltersysteme, die Aldehyde oder Ketone freisetzen und damit zu Geruchsbelästigungen und Blasen in dickeren Lackschichten führen können.

In der EP-A-0 361 048 werden "härtbare Zusammensetzungen" beschrieben, die bei niedrigen Temperaturen aushärten und damit insbesondere für die Autoreparaturlackierung geeignet sind. Es handelt sich jedoch hierbei einerseits um Abspaltersysteme mit den bereits genannten Nachteilen und andererseits um organische Lösungen, die Lösungsmittel in "üblichen Mengen" enthalten und somit nicht als lösungsmittelarm angesehen werden können.

Um z.B. Zweikomponenten-Reaktivsysteme mit konventionellen Spritzpistolen, die in der Automobilreparaturlackiertechnologie den Stand der Technik repräsentieren, applizieren zu können, müssen diese Systeme eine gewisse Verarbeitungszeit - definiert als die Zeit von der Vermischung der beiden Komponenten bis zur Verdoppelung der Auslaufviskosität - aufweisen.

Es war daher die der Erfindung zugrundeliegende Aufgabe, einen Zweikomponenten-Autoreparaturlack zur Verfügung zu stellen, der einerseits die ausgezeichneten anwendungstechnischen Eigenschaften von Zweikomponenten-Polyurethanlacken in sich vereinigt, und der andererseits bei einer Auslaufviskosität nach DIN 53 211 von 17 sec einen Festkörpergehalt von 45 bis 65 Gew.-% aufweist, dessen Verarbeitungszeit, definiert als die Zeit von der Vermischung der Komponenten bis zur Verdoppelung der Auslaufzeit, mindestens 1 Stunde beträgt, und dessen Aushärtung nach erfolgter Applikation auf dem Substrat bei Temperaturen von maximal 60 °C erfolgen kann.

Diese Aufgabe konnte mit der nachstehend näher beschriebenen erfindungsgemäßen Verwendung von ausgewählten Bindemittelkombinationen gelöst werden.

Gegenstand der Erfindung ist die Verwendung von Bindemittelkombinationen, bestehend im wesentlichen aus

a) einer Polyisocyanatkomponente und

b) einer gegenüber Polyisocyanaten reaktionsfähigen Reaktivkomponente, bestehend aus einem Gemisch von organischen Verbindungen mit gegenüber Isocyanatgruppen reaktionsfähigen Gruppen,

wobei die Mengenverhältnisse der Komponenten a) und b) einem Äquivalentverhältnis von Isocyanatgruppen der Komponente a) zu gegenüber Isocyanatgruppen reaktionsfähigen Gruppen der Komponente b) von 0,8:1 bis 20:1 entsprechen, als Bindemittel in Zweikomponenten-Autoreparaturlacken, dadurch gekennzeichnet, daß die Komponente b) im wesentlichen aus einem Gemisch aus

b1) einem sekundären Diamin der Formel

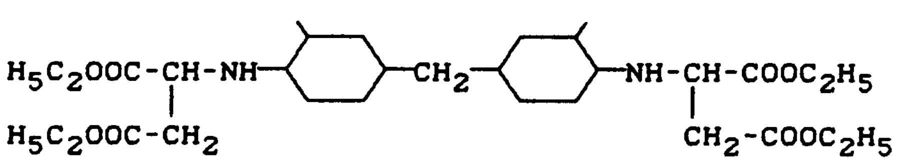

und

b2) einer Polyhydroxylkomponente, bestehend aus (i) Polyhydroxypolyacrylaten der aus der Polyurethanchemie an sich bekannten Art oder (ii) Gemischen von derartigen Polyhydroxypolyacrylaten mit bis zu 95 Gew.-%, bezogen auf das Gemisch (ii) an Polyesterpolyolen der aus der Polyurethanchemie an sich bekannten Art

besteht, wobei das Gewichtsverhältnis der Komponenten b1) und b2) bei 0,7:1 bis 20:1 liegt.

Die eigene ältere deutsche Patentanmeldung P 39 20 574.6 beschreibt zwar neben anderen Zweikomponenten-Bindemittelkombinationen auch solche, die den erfindungsgemäß zu verwendenden Bindemittelkombinationen weitgehend entsprechen, jedoch ohne jeglichen Hinweis auf die vorzügliche Eignung dieser Bindemittelkombinationen als Bindemittel in Zweikomponenten-Autoreparaturlacken.

Zur Herstellung der erfindungsgemäß zu verwendenden Bindemittelkombinationen kommen als Polyisocyanatkomponente a) im Prinzip alle aus der Polyurethanchemie bekannten Polyisocyanate in Betracht. Beispielsweise gut geeignet sind niedermolekulare Polyisocyanate des Molekulargewichtsbereichs 166 bis 300 wie beispielsweise Hexamethylendiisocyanat, 2,2,4- und/oder 2,4,4-Trimethyl-1,6-hexamethylendiisocyanat, Dodecamethylendiisocyanat, 1,4-Diisocyanatocyclohexan, 1-Isocyanato-3,3,5-trimethyl-5-isocyanatomethyl-cyclohexan (IPDI), 2,4'- und/oder 4,4'-Diisocyanato-dicyclohexylmethan, 2,4'- und/oder 4,4'-Diisocyanato-diphenylmethan oder Gemische dieser Isomeren mit ihren höheren Homologen, wie sie in an sich bekannter Weise durch Phosgenierung von Anilin/Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören beispielsweise Biuretgruppen aufweisende Polyisocyanate, wie sie beispielsweise in US-PS 3 124 605, US-PS 3 201 372 oder DE-OS 1 101 394 beschrieben sind, Isocyanuratgruppen aufweisende Polyisocyanate, wie sie z.B. in der US-PS 3 001 973, in den DE-PS 1 022 789, 1 222 067 und 1 027 394 sowie in den DE-OS 1 929 034 und 2 004 048 beschrieben werden, Urethangruppen aufweisende Polyisocyanate, wie sie z.B. in der DE-OS 953 012, der BE-PS 752 261 oder in den US-PS 3 394 164 und 3 644 457 beschrieben werden, Carbodiimidgruppen aufweisende Polyisocyanate, wie sie in der DE-PS 1 092 007, in der US-PS 3 152 162 sowie in den DE-OS 2 504 400, 2 537 685 und 2 552 350 beschrieben werden und Allophanatgruppen aufweisende Polyisocyanate, wie sie z.B. in der GB-PS 994 890, in der BE-PS 761 626 und in der NL-OS 7 102 524 beschrieben werden.

Zu den besonders bevorzugten modifizierten Polyisocyanaten gehören das N,N',N''-Tris-(-6-isocyanatohexyl)-biuret und seine Gemische mit seinen höheren Homologen, sowie das N,N',N''-Tris-(-6-isocyanatohexyl)-isocyanurat bzw. dessen Gemische mit seinen höheren, mehr als einen Isocyanuratring aufweisenden Homologen.

Bei der erfindungswesentlichen Komponente b1) handelt es sich um ein Estergruppen-aufweisendes Diamin der bereits oben angegebenen Formel, das in an sich bekannter Weise durch Umsetzung von 3,3'-Dimethyl-4,4'-diamino-dicyclohexylmethan mit Malein- bzw. Fumarsäurediethylester hergestellt wird.

Die Herstellung des "Polyasparaginsäurederivats" b1) aus den genannten Ausgangsmaterialien erfolgt beispielsweise innerhalb des Temperaturbereiches von 0 bis 100 °C unter Verwendung von solchen Mengenverhältnissen, daß auf jede primäre Aminogruppe mindestens eine und vorzugsweise eine olefinische Doppelbindung entfällt.

Die Umsetzung kann in Substanz oder auch in Gegenwart von geeigneten Lösungsmitteln wie beispielsweise Methanol, Ethanol, Propanol oder Dioxan oder Gemischen derartiger Lösungsmittel erfolgen.

Die Komponente b1) wird in den erfindungsgemäß zu verwendenden Bindemittelkombinationen in Abmischung mit einer Polyhydroxylkomponente b2) eingesetzt. Es handelt sich bei dieser Polyhydroxylkomponente b2) entweder um (i) Polyhydroxypolyacrylate der aus der Polyurethanlacktechnologie an sich bekannten Art oder um (ii) Gemische von derartigen Polyhydroxypolyacrylaten mit Polyesterpolyolen der aus der Polyurethanchemie an sich bekannten Art, wobei der Gewichtsanteil der Polyesterpolyole in den Gemischen bis zu 95, vorzugsweise bis zu 60 Gew.-%, bezogen auf Gemisch, betragen kann.

Bei den genannten Polyhydroxypolyacrylaten (i) handelt es sich um Hydroxylgruppen aufweisende Copolymerisate olefinisch ungesättigter Verbindungen eines dampfdruck- bzw. membranosmometrisch bestimmten Molekulargewichts Mn von 800 bis 50.000, vorzugsweise 1000 bis 20.000 und insbesondere 5000 bis 10.000 mit einem Hydroxylgruppengehalt von 0,1 bis 12, vorzugsweise 1 bis 10 und insbesondere 2 bis 6 Gew.-%. Es handelt sich bei diesen Verbindungen um Copolymerisate von Hydroxylgruppen aufweisenden olefinischen Monomeren mit Hydroxylgruppenfreien olefinischen Monomeren. Beispiele für geeignete Monomere sind Vinyl- bzw. Vinylidenmonomere wie z.B. Styrol, $\alpha$-Methylstyrol, o- bzw. p-Chlorstyrol, o-, m- oder p-Methylstyrol, p-tert.-Butylstyrol, Acrylsäure, (Meth)Acrylnitril, Acryl-und Methacrylsäureester mit 1 bis 8 Kohlenstoffatomen wie Alkoholkomponente wie beispielsweise Ethylacrylat, Methylacrylat, n- bzw. Isopropylacrylat, n-Butylacrylat, 2-Ethylhexylacrylat, 2-Ethylhexylmethacrylat, Isooctylacrylat, Methylmethacrylat, Ethylmethacrylat, Butylmethacrylat, Isooctylmethacrylat; Diester der Fumarsäure, Itaconsäure, Maleinsäure mit 4 bis 8 Kohlenstoffatomen in der Alkoholkomponente (Meth)Acrylsäureamid, Vinylester von Alkanmonocarbonsäure mit 2 bis 5 Kohlenstoffatomen wie Vinylacetat oder Vinylpropionat und Hydroxyalkylester der Acrylsäure oder Methacrylsäure mit 2 bis 4 Kohlenstoffatomen im Hydroxyalkylrest wie z.B. 2-Hydroxyethyl-, 2-Hydroxypropyl-, 4-Hydroxybutyl, Trimethylolpropanmono- oder Pentaerythritmono-acrylat oder -methacrylat. Beliebige Gemische der beispielhaften genannten Monomeren können bei der Herstellung der hydroxyfunktionellen Polyacrylate selbstverständlich auch eingesetzt werden.

Bei den Polyesterpolyolen, die gegebenenfalls im Gemisch mit den Polyhydroxypolyacrylaten eingesetzt werden, handelt es sich um übliche Polyesterpolyole der Polyurethanchemie mit einem Hydroxylgruppengehalt von 0,2 bis 17, vorzugsweise 0,5 bis 10 Gew.-%, wie sie in an sich bekannter Weise durch Umsetzung von mehrbasischen Carbonsäuren und/oder intramolekularen Anhydriden mehrbasischer Carbonsäuren, gegebenenfalls unter Mitverwendung unterschüssiger Mengen an einbasischen Carbonsäuren, mit einem Überschuß an organischen Polyhydroxylverbindungen, gegebenenfalls unter Mitverwendung von unterschüssigen Mengen an einwertigen Alkoholen erhalten werden.

Zur Herstellung der Polyesterpolyole geeignete Säuren oder Säureanhydride sind beispielsweise Adipinsäure, Sebacinsäure, Phthalsäure, Isophthalsäure, Tetrahydrophthalsäure, Hexahydrophthalsäure, Maleinsäure, die Anhydride derartiger Säuren, beliebige Gemische derartiger Säuren bzw. Säureanhydride, die auch geringe Mengen an einbasischen Säuren wie beispielsweise an 2-Ethylhexansäure enthalten können.

Zur Herstellung der Polyesterpolyole geeignete Alkohole sind beispielsweise organische Polyhydroxylverbindungen des Molekulargewichtsbereichs 62 bis 200 wie Ethylenglykol, Propylenglykol, 1,4-Dihydroxybutan, 1,6-Dihydroxyhexan, Glycerin, Trimethylolpropan oder beliebige Gemische derartiger mehrwertiger Alkohole, die auch unterschüssige Mengen an einwertigen Alkoholen wie beispielsweise n-Hexanol enthalten können.

Die gegebenenfalls als Komponente b2) eingesetzten Gemische (ii) können durch Abmischung der Einzelkomponenten, d.h. der Polyhydroxypolyacrylate mit den Polyesterpolyolen erhalten werden. Unter solchen Gemischen (ii) sollen jedoch auch Systeme verstanden werden, die durch Herstellung der Polyhydroxypolyacrylate durch Copolymerisation der beispielhaft genannten Monomeren in Polyesterpolyolen der beispielhaft genannten Art als Reaktionsmedium erhalten werden. In den hierbei entstehenden Gemischen liegen teilweise auch Pfropfcopolymerisate vor, in denen die Polyesterpolyole die Pfropfgrundlage bilden.

In den erfindungsgemäß eingesetzten Bindemitteln werden im übrigen die Mengenverhältnisse der Komponenten a), b1) und b2) so bemessen, daß das Äquivalentverhältnis von Isocyanatgruppen zu gegenüber Isocyanatgruppen reaktionsfähigen Gruppen bei 0,8:1 bis 20:1, vorzugsweise 0,8:1 bis 2:1 und insbesondere 0,8:1 bis 1,5:1 liegt.

Das Gewichtsverhältnis der Reaktivkomponenten b1) und b2) liegt, bezogen auf den Festkörpergehalt, bei 0,7:1 bis 20:1, vorzugsweise bei 1,5:1 bis 5,5:1 und insbesondere bei 2,3:1 bis 4:1.

Die Herstellung der erfindungsgemäß zu verwendenden Bindemittelkombinationen geschieht durch Abmischung der Einzelkomponenten, wobei die Reaktivkomponenten b1) und b2) auch vorab vermischt werden können. Im übrigen erfolgt die Herstellung der Bindemittelkombinationen und auch der gebrauchsfertigen Beschichtungsmittel im allgemeinen in Anwesenheit der in der Beschichtungstechnologie üblichen Lösungsmittel, wobei es allerdings ein Vorteil der Erfindung ist, daß die Menge der hierzu benötigten Lösungsmittel im Vergleich zu den bekannten Zweikomponenten-Polyurethanlacken des Standes der Technik bei gleichbleibender Verarbeitungsviskosität wesentlich niedriger gehalten werden kann.

Geeignete Lösungsmittel sind beispielsweise Xylol, Butylacetat, Methylisobutylketon, Methoxypropylacetat, N-Methylpyrrolidon, ®Solvesso, Benzin, Chlorbenzole oder deren Gemische derartiger Lösungsmittel.

Im allgemeinen liegt das Gewichtsverhältnis der Gesamtmenge der Bindemittelkomponnten a), b1) und b2) zu Lösungsmittel bei 45:55 bis 100:0, vorzugsweise 55:45 bis 65:35.

In den die erfindungsgemäß zu verwendenden Bindemittelkombinationen enthaltenden Beschichtungsmitteln können auch andere in der Beschichtungstechnologie übliche Hilfs- und Zusatzmittel enthalten sein. Hierzu gehören insbesondere Pigmente, Füllstoffe, Verlaufshilfsmittel, Katalysatoren, Antiabsetzmittel und dergleichen.

Die Beschichtungsmittel können nach an sich bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Die die erfindungsgemäß zu verwendenden Bindemittelkombinationen enthaltenden Beschichtungsmittel stellen ausgezeichnete Autoreparaturlacke dar und können hierbei sowohl zur Herstellung von Zwischenschichten als auch von pigmentierten oder unpigmentierten Decklacken eingesetzt

werden.

Die Lacke werden im allgemeinen innerhalb des Temperaturbereichs von -20 bis +60 °C, vorzugsweise von -10 bis +40 °C ausgehärtet.

In den nachfolgenden Ausführungsbeispielen beziehen sich alle Prozentangaben auf das Gewicht.

Beispiele

In den nachfolgenden Beispielen werden folgende Ausgangsmaterialien eingesetzt:

Polyisocyanatkomponente a1)

Handelsübliches Lackpolyisocyanat, erhalten durch Trimerisierung von Hexamethylendiisocyanat (90 %ige Lösung in Butylacetat/Solventnaphtha 100 (1:1), NCO-Gehalt der Lösung 19,4 %).

Diaminkomponente b1)

476 g 3,3'-Dimethyl-4,4'-diaminodicyclohexylmethan (®Laromin C 260 der BASF AG) werden mit 129 g Butylacetat unter Stickstoffatmosphäre bei 60 °C vorgelegt. Hierzu werden 688 g Maleinsäurediethylester über 8 h getropft. Man läßt ca. 16 h bei 60 °C unter Stickstoffatmosphäre nachrühren und erhält ein klares, nahezu farbloses Produkt mit einer Viskosität von ca. 100 mPa.s (23 °C) und einem Äquivalentgewicht von ca. 328 g.

Polyolkomponenten b2)

Polyol I

60 %ige Lösung eines Copolymerisats des Molekulargewichts Mn 6.500 in Xylol mit einem Hydroxylgruppengehalt der Lösung von 1,6 % aus
45,90 % Styrol
29,48 % Butylacrylat
1,91 % Methylmethacrylat
18,79 % Hydroxypropylmethacrylat
0,63 % Acrylsäure
3,29 % t-Butylperoxid

Polyol II

65 %ige Lösung in Butylacetat/Xylol (Gew.-Verhältnis 3:1) mit einem Hydroxylgruppengehalt von 2,8 % in einer Mischung aus 40 Gew.-Teilen eines Polyesterpolyols aus
38,84 % Trimethylolpropan
28,35 % Phthalsäureanhydrid
9,87 % Adipinsäure
21,07 % 2-Ethylhexansäure
1,87 % Maleinsäureanhydrid
und 60 Gew.-Teilen eines Copolymerisats des Molekulargewichts Mn 3.700 aus
39,63 % Styrol
23,57 % Butylacrylat
31,42 % Hydroxyethylmethacrylat
0,94 % Acrylsäure
4,44 % t-Butylperoctoat

Polyol III

50 %ige Lösung eines Copolymerisats des Molekulargewichts Mn 9.000 in Butylacetat/Xylol (Gew.-Verhältnis 1:1) mit einem Hydroxylgruppengehalt der Lösung von 1,0 % aus
68,02 % Methylmethacrylat
13,81 % 2-Ethylhexylacrylat
15,77 % Hydroxyethylmethacrylat

0,99 % Acrylsäure
1,41 % t-Butylperoxid

Beispiel 1

78 g des Diamins b1) und 50 g des Polyols I werden mit dem Polyisocyanat a) in äquivalentem Verhältnis (NCO:(NH + OH) = 1:1) zu einem Klarlack formuliert und mit Methoxypropylacetat/Butylacetat/Xylol 1:1:1 auf einen Festkörpergehalt von 53 % eingestellt.

Beispiel 2 (Vergleichsbeispiel zu Beispiel 1)

168 g des Polyols I werden mit dem Polyisocyanat a) in äquivalentem Verhältnis (NCO:OH = 1:1) zu einem Klarlack formuliert und mit Methoxypropylacetat/Butylacetat/Xylol 1:1:1 auf einen Festkörpergehalt von 42 % eingestellt.

Beispiel 3

78 g des Diamins b1) und 46 g des Polyols II werden mit dem Polyisocyanat a) in äquivalentem Verhältnis (NCO:(NH + OH) = 1:1) zu einem Klarlack formuliert und mit Methoxypropylacetat/Butylacetat/Xylol 1:1:1 auf einen Festkörpergehalt von 59 % eingestellt.

Beispiel 4 (Vergleichsbeispiel zu Beispiel 3)

154 g des Polyols II werden mit dem Polyisocyanat a) in äquivalentem Verhältnis (NCO:OH = 1:1) zu einem Klarlack formuliert, der mit Methoxypropylacetat/Butylacetat/Xylol 1:1:1 auf einen Festkörpergehalt von 43 % eingestellt wird.

Beispiel 5

78 g des sekundären Amins b1) und 60 g des Polyols III werden mit dem Polyisocyanat a) in äquivalentem Verhältnis (NCO:(NH + OH) = 1:1) zu einem Klarlack formuliert und mit Methoxypropylacetat/Butylacetat/Xylol 1:1:1 auf einen Festkörpergehalt von 57 % eingestellt.

Beispiel 6 (Vergleichsbeispiel zu Beispiel 5)

200 g des Polyols III werden mit dem Polyisocyanat a) in äquivalentem Verhältnis (NCO:OH = 1:1) zu einem Klarlack formuliert, der mit Methoxypropylacetat/Butylacetat/Xylol 1:1:1 auf einen Festkörpergehalt von 33 % eingestellt wird.

Unter Verwendung der Klarlacke gemäß Beispielen 1 bis 6 werden sowohl mit einem Basislack beschichtete Stahlbleche als auch Glasplatten beschichtet. Bei dem Basislack handelt es sich um eine lösungsmittelhaltige Zubereitung, bestehend aus einer Abmischung von Celluloseacetobutyrat und einem hochmolekularen Polyacrylat.

Die Beschichtung der Stahlbleche mit dem Basislack erfolgte durch Spritzapplikation, wobei die Trockenschichtstärke ca. 15 µm betrug.

Weitere Einzelheiten können der nachstehenden Tabelle entnommen werden.

| | Bsp. 1 | Bsp. 2 | Bsp. 3 | Bsp. 4 | Bsp. 5 | Bsp. 6 |
|---|---|---|---|---|---|---|
| Festkörpergehalt (%) | 53 | 42 | 59 | 43 | 57 | 33 |
| Auslaufzeit | | | | | | |
| DIN 53 211 (sec) | 15 | 16 | 16 | 16 | 16 | 16 |
| Verarbeitungszeit[1)] (h) | 4,5 | >6 | 1,5 | 5 | 3,5 | >6 |
| Sandtrocknung | | | | | | |
| DIN 53 150 (h) | 3,5 | 0,75 | 2,5 | 1,5 | 1,5 | 0,5 |
| Grifftrocknung | | | | | | |
| DIN 53 150 (h) | 6 | >8 | 4,5 | 5,5 | 5,5 | 2,5 |
| Pendelhärte DIN 53 157 | | | | | | |
| Klarlack auf Basislack[2)] | | | | | | |
| nach 1 d RT (sec) | 120 | 48 | 70 | 74 | 115 | 50 |
| nach 2 d RT (sec) | 143 | 90 | 76 | 80 | 120 | 70 |
| nach 5 d RT (sec) | 158 | 125 | 90 | 105 | 130 | 85 |
| Klarlack auf Glasplatte[2)] | | | | | | |
| nach 1 d RT (sec) | 134 | 45 | 116 | 112 | 137 | 80 |
| nach 2 d RT (sec) | 168 | 98 | 125 | 140 | 160 | 105 |
| nach 5 d RT (sec) | 186 | 164 | 132 | 158 | 180 | 144 |
| Superbenzinfestigkeit[3)] | | | | | | |
| 5' nach 1 d RT | 2 | 5 | 0 | 0 | 1 | 0 |
| 5' nach 2 d RT | 2 | 5 | 0 | 0 | 1 | 0 |
| 5' nach 5 d RT | 0 | 1 | 0 | 0 | 0 | 0 |
| Erichsen-Tiefung | | | | | | |
| DIN 53 156 (mm) | 10,5 | 10,5 | 10,0 | 10,0 | 10,0 | 10,0 |

1) Definiert als Zeit bis zur Verdoppelung der Auslaufzeit

2) Schichtdicke ca. 50 µm

3) Wertung 0 - 5, 0 = bester Wert
5 = schlechtester Wert

## Patentansprüche

1. Verwendung von Bindemittelkombinationen, bestehend im wesentlichen aus
   a) einer Polyisocyanatkomponente und
   b) einer gegenüber Polyisocyanaten reaktionsfähigen Reaktivkomponente, bestehend aus einem Gemisch von organischen Verbindungen mit gegenüber Isocyanatgruppen reaktionsfähigen Gruppen,

   wobei die Mengenverhältnisse der Komponenten a) und b) einem Äquivalentverhältnis von Isocyanatgruppen der Komponente a) zu gegenüber Isocyanatgruppen reaktionsfähigen Gruppen der Komponente b) von 0,8:1 bis 20:1 entsprechen, als Bindemittel in Zweikomponenten-Autoreparaturlacken, dadurch gekennzeichnet, daß die Komponente b) im wesentlichen aus einem Gemisch aus
   b1) einem sekundären Diamin der Formel

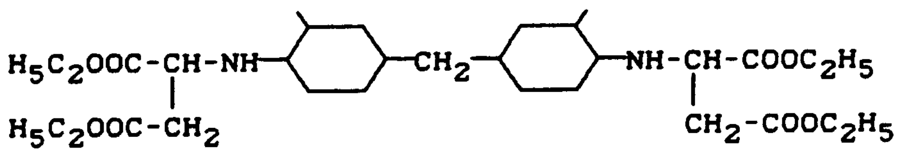

   und
   b2) einer Polyhydroxylkomponente, bestehend aus (i) Polyhydroxypolyacrylaten der aus der Polyurethanchemie an sich bekannten Art oder (ii) Gemischen von derartigen Polyhydroxypolyacrylaten mit bis zu 95 Gew.-%, bezogen auf das Gemisch (ii) an Polyesterpolyolen der aus der Polyurethanchemie an sich bekannten Art

   besteht, wobei das Gewichtsverhältnis der Komponenten b1) und b2) bei 0,7:1 bis 20:1 liegt.

2. Verwendung gemäß Anspruch 1, dadurch gekennzeichnet, daß die Komponente b2) aus mindestens einem Copolymerisat olefinisch ungesättigter Monomerer mit einem Molekulargewicht Mn von 800 bis 50 000 und einem Hydroxylgruppengehalt von 0,1 bis 12 Gew.-% besteht.

3. Verwendung gemäß Anspruch 1 und 2, dadurch gekennzeichnet, daß die Polyisocyanatkomponente a) aus N,N',N''-Tris-(6-isocyanatohexyl)-biuret, dessen Gemischen mit seien höheren Homologen, N,N',N''-Tris-(6-isocyanatohexyl)-isocyanurat oder dessen Gemischen mit seinen höheren, mehr als einen Isocyanuratring aufweisenden Homologen besteht.

4. Verwendung gemäß Anspruch 1 bis 3 in Zweikomponenten-Autoreparatur-Decklacken.

## Claims

1. The use of binder combinations consisting essentially of
   a) a polyisocyanate component and
   b) a polyisocyanate-reactive component consisting of a mixture of organic compounds containing isocyanate-reactive groups,

   the quantity ratios between components a) and b) corresponding to an equivalent ratio of isocyanate groups in component a) to isocyanate-reactive groups in component b) of 0.8:1 to 20:1,
   as binders in two-component car repair lacquers, characterized in that component b) consists essentially of a mixture of
   b1) a secondary diamine corresponding to the following formula:

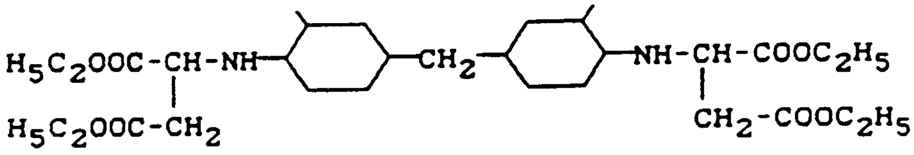

and

b2) a polyhydroxyl component consisting of (i) polyhydroxypolyacrylates of the type known per se from polyurethane chemistry or (ii) mixtures of such polyhydroxypolyacrylates containing up to 95% by weight, based on the mixture (ii), of polyester polyols of the type known per se from polyurethane chemistry,

the ratio by weight of component b1) to component b2) being 0.7:1 to 20:1.

**2.** The use claimed in claim 1, characterized in that component b2) consists of at least one copolymer of olefinically unsaturated monomers with a molecular weight Mn of 800 to 50,000 and a hydroxyl group content of 0.1 to 12% by weight.

**3.** The use claimed in claims 1 and 2, characterized in that the polyisocyanate component a) consists of N,N',N''-tris-(6-isocyanatohexyl)-biuret, mixtures thereof with higher homologs thereof, N,N',N''-tris-(isocyanatohexyl)-isocyanurate or mixtures thereof with higher homologs thereof containing more than one isocyanurate ring.

**4.** The use claimed in claims 1 to 3 in two-component car repair finishing lacquers.

**Revendications**

**1.** Utilisation d'associations de liants, principalement constituées :

a) d'un composant polyisocyanate et

b) d'un composant réactif apte à réagir vis-à-vis de polyisocyanates, constitué d'un mélange de composés organiques portant des groupes aptes à réagir vis-à-vis de groupes isocyanato,

les rapports quantitatifs des composants a) et b) correspondant à un rapport d'équivalents des groupes isocyanato du composant a) aux groupes du composant b) aptes à réagir vis-à-vis de groupes isocyanato de 0,8:1 à 20:1,

comme liants dans des peintures à deux composants pour retouches de carrosseries, caractérisée en ce que le composant b) est principalement constitué d'un mélange

b1) d'une diamine secondaire de formule

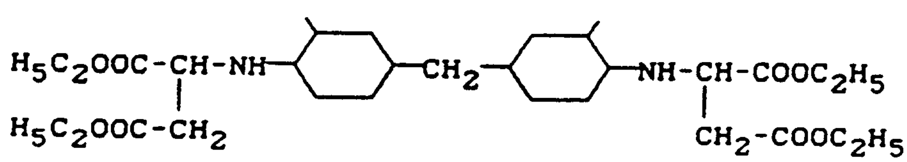

et

b2) d'un composant polyhydroxylique constitué (i) de polyhydroxypolyacrylates de type connu dans la chimie des polyuréthannes ou (ii) de mélanges de polyhydroxypolyacrylates de ce type avec jusqu'à 95 % en poids, par rapport au mélange (ii), de polyesterpolyols de type connu dans la chimie des polyuréthannes, le rapport en poids des composants b1) et b2) ayant une valeur de 0,7:1 à 20:1.

**2.** Utilisation suivant la revendication 1, caractérisée en ce que le composant b2) est constitué d'au moins un copolymère de monomères à non-saturation oléfinique ayant un poids moléculaire $M_n$ de 800 à 50 000 et une teneur en groupes hydroxyle de 0,1 à 12 % en poids.

**3.** Utilisation suivant les revendications 1 et 2, caractérisée en ce que le composant polyisocyanate a) est constitué de N,N',N''-tris-(6-isocyanatohexyl)biuret, de ses mélanges avec ses homologues supérieurs, de N,N',N''-tris-(6-isocyanatohexyl)isocyanurate ou de ses mélanges avec ses homologues supérieurs présentant plus d'un noyau isocyanurate.

**4.** Utilisation suivant les revendications 1 à 3 dans des peintures de finition à deux composants pour retouches de carrosseries.